# EUROPEAN PATENT SPECIFICATION

(11) **EP 3 012 539 B1**
(45) Date of publication and mention of the grant of the patent: **06.09.2017**
(21) Application number: 14189714.0
(22) Date of filing: 21.10.2014
(51) Int. Cl.: F24D 11/02, F24D 17/02, F24D 19/10, G05D 23/00, H02J 3/00

(54) **Controlling a heating system**
Steuerung eines Heizsystems
Commande d'un système de chauffage

(43) Date of publication of application: 27.04.2016
(73) Proprietor: LVI-Energiakeskus Aro Oy, 29250 Nakkila (FI)
(72) Inventor: Aro, Sami Olli Kristian, 29280 Järvimaa (FI)
(74) Representative: Koivisto, Harri Kristian

(56) References cited:
- EP-A1- 2 759 774
- CN-U- 203 177 308
- DE-A1- 3 151 688
- DE-U1-202014 002 340
- US-A1- 2010 230 071

## Description

### FIELD OF THE INVENTION

The invention relates to the controlling of a heating system according to the preamble of claims 1 and 8. One example of a method and a controller for controlling a heating system is disclosed in US2010/230071A1. More specifically, the invention relates to the controlling of a heating system comprising a ground source heat pump and in an embodiment a photovoltaic power system.

### BACKGROUND OF THE INVENTION

The ground source heat pump is a heating application that transfers heat from the ground to a fluid circulating in a building, a residence, any premises or other space to be heated. In some applications the ground source heat pump may be used to cool the space. The ground source heat pump uses electric power to operate, and in an embodiment a photovoltaic system may provide the electric power to the ground source heat pump. Traditional heat pumps are not designed to utilize variable power from the photovoltaic system for example during the night time when the temperature requirement is usually high. Ground source heat pumps are common technology, but the efficient integration to different power sources may require modifications to the heat pump technology. This may increase the price as the technology becomes proprietary.

### PURPOSE OF THE INVENTION

The purpose of the invention is to present a new method, a controller and a system for controlling a heating system. A further purpose of the invention is to remove or at least alleviate any problems of the prior art.

### SUMMARY

The invention discloses a method for controlling a heating system comprising a first hot water boiler, a ground source heat pump configured to heat the water of the first hot water boiler, a controller connected to the ground source heat pump and to the first hot water boiler. The method comprises the controller receiving first temperature data from the first layer of the first hot water boiler; and the controller modifying the first temperature data to a lower temperature and sending the modified temperature data to the ground source heat pump, causing the ground source heat pump to heat the water for the first hot water boiler. The controller modifies the temperature data that is purposed for the ground source heat pump. According to prior art the ground source heat pump receives the actual temperature data from the hot water boiler and operates accordingly. The present method modifies the temperature data and causes the ground source heat pump to operate under other circumstances, such as when free or low-price electricity is available. This may cause the ground source heat pump to operate with a slightly lower COP (Coefficient Of Performance), but the overall heating cost is lower.

In an embodiment the heating system comprises at least two power sources comprising a photovoltaic system connected to a power inverter and a connection to a power-distribution network, wherein the power sources are connected to the controller, to the ground source heat pump and to the first hot water boiler. According to the method the controller receives information of the power provided by the photovoltaic system; selects the power source according to the power received from the photovoltaic system, and if the power provided by the photovoltaic system is greater than the first power limit, the photovoltaic system provides power to the ground source heat pump. The power inverter converts the direct current provided by the photovoltaic system to alternating current according to parameters that correlate with the power-distribution network.

In an embodiment the method comprises a step wherein, if the power provided by the photovoltaic system is less than the first power limit, the power-distribution network provides power to the ground source heat pump. The photovoltaic system is used when the electric power received from the photovoltaic system is enough to run the ground source heat pump. In an embodiment the photovoltaic system provides the power required by the ground source heat pump partially, in combination with the power-distribution network according to the method obvious to a man skilled in the art.

In an embodiment the method comprises a step wherein, if the power provided by the photovoltaic system is less than the first power limit, the direct current provided by the photovoltaic system is directed to the boiler for heating the water. The electric power is directed from the photovoltaic system to the hot water boiler, not using the inverter. The direct current may be used to heat the heating element such as the resistor in the hot water boiler, thereby eliminating any possible power losses during the conversion from direct current to alternating current.

In an embodiment the controller receives second temperature data from the second layer of the first hot water boiler, wherein the second layer is below the first layer and the second temperature data is lower than the first temperature data, the controller modifying the first temperature data to correspond to the second temperature data. The hot water boiler has outputs for at least two temperature sensors arranged in different layers. The warmest water is usually found in the top portion of the boiler, as the warmer water has a tendency to rise above the cooler water, and as a result the water in the boiler may be layered according to different temperatures. The ground source heat pump may be operated with the temperature information received from the top portion of the hot water boiler, wherein the full capacity of the boiler is not used to store the available free or low-priced energy. By monitoring the temperature in the lower portion of the boiler, the controller may ensure that the boiler operates within its safety limits while the energy is stored in the water in the boiler.

In an embodiment the controller modifies the first temperature data as a response to an outside temperature being below a predetermined value. For cooler outside temperatures below the predetermined limit, the building requires more heating power. The controller adapts to the outside temperature and controls the power sources accordingly.

In an embodiment the heating system comprises a second hot water boiler and the controller receives the first temperature data and the second temperature data from the first hot water boiler and from the second hot water boiler and receives the power data from the photovoltaic system, wherein, if the second temperature data from the first hot water boiler is over the predefined temperature limit, the photovoltaic system provides power to the ground source heat pump and the hot water is directed to the second hot water boiler. The second hot water boiler may be used to store the free or low-priced energy. The first temperature data and the second temperature data of the second hot water boiler are defined similarly to the first hot water boiler. When the first hot water boiler is full of warm water and the lower layer temperature is over a predefined limit, the energy received from the photovoltaic system is directed to the second hot water boiler.

A second aspect of the invention discloses a controller for controlling a heating system. The heating system comprises a first hot water boiler, a ground source heat pump configured to heat the water of the first hot water boiler. The controller is connected to the ground source heat pump and to the first hot water boiler for example electrically, for directing electric power and to receive and transmit for example measurement or control data. The controller comprises means for receiving first temperature data from the first layer of the first hot water boiler; and means for modifying the first temperature data to a lower temperature and means for sending the modified temperature data to the ground source heat pump, causing the ground source heat pump to heat the water for the first hot water boiler. The means for receiving and sending data may be either analog or digital signaling.

In an embodiment the heating system comprises at least two power sources comprising a photovoltaic system connected to a power inverter and a connection to a power-distribution network, wherein the power sources are connected to the controller, to the ground source heat pump and to the first hot water boiler; the controller comprises means for receiving information of the power provided by the photovoltaic system; means for selecting the power source according to the power received from the photovoltaic system; and means for directing power from the photovoltaic system to the ground source heat pump if the power provided by the photovoltaic system is greater than the first power limit.

In an embodiment the controller comprises means for directing power from the power-distribution network to the ground source heat pump if the power provided by the photovoltaic system is less than the first power limit. In an embodiment the controller comprises means for directing the direct current provided by the photovoltaic system to the boiler for heating the water if the power provided by the photovoltaic system is less than the first power limit. The means for directing power or selecting electric energy comprise for example controlling signals, relays and/or switches to select a connection between power sources.

In an embodiment the controller comprises means for receiving second temperature data from the second layer of the first hot water boiler, wherein the second layer is below the first layer and the second temperature data is lower than the first temperature data, and the controller comprises means for modifying the first temperature data to correspond to the second temperature data. In an embodiment the controller comprises means for modifying the first temperature data as a response to an outside temperature being below a predetermined value.

In an embodiment the heating system comprises a second hot water boiler and the controller comprises means for receiving the first temperature data and the second temperature data from the first hot water boiler and from the second hot water boiler; and means for receiving the power data from the photovoltaic system, wherein, if the second temperature data from the first hot water boiler is over the predefined temperature limit, the controller comprises means for directing the power provided by the photovoltaic system to the ground source heat pump and means for directing the hot water to the second hot water boiler.

A third aspect of the invention discloses a system that comprises the heating system and the controller according to the first aspect and to the second aspect. The system further comprises a pre-fabricated housing comprising connecting and receiving means to the power-distribution network and to a water supply; means for providing hot and cold water to a building; and means for providing electric power to the building. The pre-fabricated housing is for example a shed, a warehouse or a building that may be transported to the building plot. In one example the housing comprises the heating system and an interface for the building, wherein the technical properties related to heating, water distribution or electric power distribution may be pre-fabricated and pre-installed. The housing is a simple solution to provide technical connections to a construction site.

The embodiments of the invention described hereinbefore may be used in any combination with each other. Several of the embodiments may be combined together to form a further embodiment of the invention. A method, a controller, a system, a computer program or a computer program product to which the invention is related may comprise at least one of the embodiments of the invention described hereinbefore_{.}

The present invention enables integration of different power sources to be used with a ground source heat pump. For example the solar power received from the photovoltaic system may be efficiently directed to a suitable target, such as the heating element inside the boiler, or be directed via the inverter to the building's main switchboard and be used by home appliances as AC electric power.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Fig. 1** is an example of a block diagram illustrating the elements of the heating system and the controller,
**Fig. 2** is an example of a block diagram illustrating the elements of another heating system and the controller, and
**Fig. 3** is an example of the housing according to an aspect of the invention.

### DETAILED DESCRIPTION OF THE INVENTION

Reference will now be made in detail to the embodiments of the present invention, examples of which are illustrated in the accompanying drawings. The detailed description provided below in connection with the appended drawings is intended as a description of the present examples and is not intended to represent the only forms in which the present example may be constructed or utilized. However, the same or equivalent functions and sequences may be accomplished by different examples.

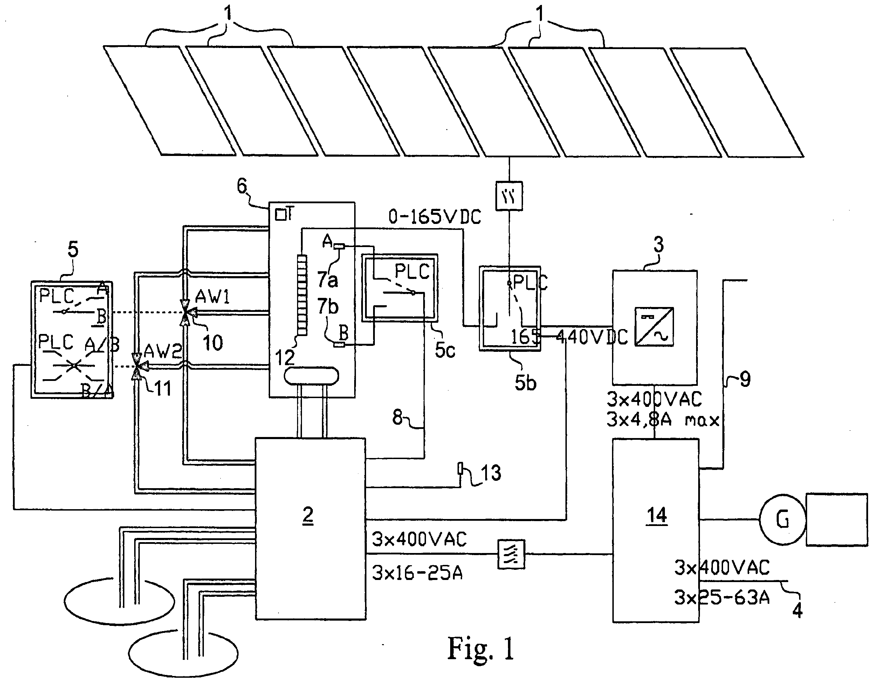

Figure 1 illustrates one embodiment wherein the photovoltaic system 1 is operated with the ground source heat pump 2. The photovoltaic system 1 may comprise solar panels to absorb and convert solar energy to electric power. The photovoltaic system 1 is connected to an inverter 3 that converts the direct current DC to alternating current AC that has similar characteristics as the electricity received from the power-distribution network 4. The controller 5 is connected to the ground source heat pump 2 electrically, receiving and transmitting the control and temperature data. A portion 5c of the controller 5 is connected to two positions in the first hot water boiler 6, the first temperature data is received from the first layer, from the first temperature sensor 7a. The second temperature data is received from the second layer, from the second temperature sensor 7b. The water temperature may be different in different layers as the warmer water moves up and cooler water moves down.

The portion 5c of the controller 5 selects the temperature data sent to the ground source heat pump 2 according to predefined rules. An example of a rule is that the photovoltaic system 1 provides sufficient power to run the ground source heat pump 2. Then the portion 5c selects the information received from the second temperature sensor 7b and connects the temperature information to the input 8 of the ground source heat pump 2 that is purposed for the first temperature sensor 7a. The portion 5b of the controller 5 directs the electric power received from the photovoltaic system 1 to the inverter 3 and the AC power to the ground source heat pump 2. The electric power from the inverter 3 is directed in this example via the main switchboard 14 by which electricity supply of a building or other similar entity is controlled. The power received from the photovoltaic system 1 is cheaper than the electric power received from the power-distribution network 4; therefore, the energy storage received from the photovoltaic system is maximized by heating the first hot water boiler 6 to the maximum temperature. The energy stored into the water reservoir may be used during the night time or any other off-peak hours. The power provided by the photovoltaic system 1 may be derived from the voltage level of the output.

One embodiment comprises a second hot water boiler that may be used when the first hot water boiler 6 has been heated to its full capacity, when the second temperature sensor 7b is over the predetermined temperature limit. In an embodiment the second hot water boiler is heated when the first temperature sensor 7a is over a predetermined temperature limit that indicates that the first hot water boiler is heated efficiently. The controller may comprise other rules to distribute the heated water and the direct current from the photovoltaic system between the first hot water boiler 6 and the second hot water boiler.

In one embodiment the controller 5 directs the electric power received from the photovoltaic system 1 to the inverter 3 and manipulates the ground source heat pump 2 to operate, for example by modifying the temperature data from the hot water boiler 6. The controller 5 uses the energy received from the photovoltaic system 1 to fully charge the hot water boiler with the ground source heat pump 2 or with a heating element such as a resistance thermal element. The fixed condensing of the ground source heat pump 2 heats the water reservoir to the full content. According to one example, if the power provided by the photovoltaic system 1 is below a predetermined limit, for example the output voltage is below a threshold value, the controller 5 directs the power to the heating element 12 inside the hot water boiler 6. This reduces the losses of the inverting stage, particularly in a situation where the power provided by the photovoltaic system is not sufficient to run the ground source heat pump 2.

In an embodiment, when the electric power received from the photovoltaic system 1 is not sufficient to run the ground source heat pump 2, the ground source heat pump 2 may receive electric power from the power-distribution network 4. The ground source heat pump 2 may heat the water in the hot water reservoir only according to the need for the used hot water that may be defined according to the outside temperature 13. This may be referred to as variable condensing. The controller 5 may direct the electric power received from the photovoltaic system 1 to the inverter 3 and to the building power network 9.

The ground source heat pump 2 is connected to the first hot water boiler 6 and in one embodiment to the second hot water boiler by water pipes and valves 10, 11 that control the circulation of water between the ground source heat pump 2 and the boiler 6. The controller 5 is connected to valves 10, 11, wherein the controller 5 may control the flow of the water between the first hot water boiler 6 and the ground source heat pump 2.

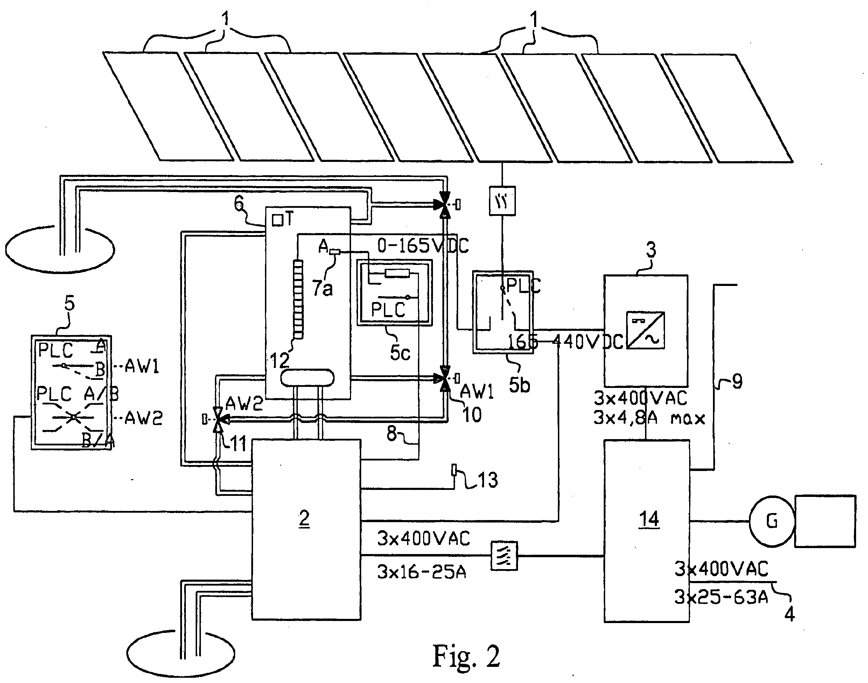

Figure 2 illustrates one embodiment, wherein the heating system comprises the first hot water boiler 6 with only the first temperature sensor 7a. According to this embodiment the temperature information 8 provided to the ground source heat pump 2 is modified by the portion 5c of the controller 5. The portion 5c may comprise a resistor that is configured to change the temperature sensor 7a value or the temperature value may be modified with processor means of the controller 5.

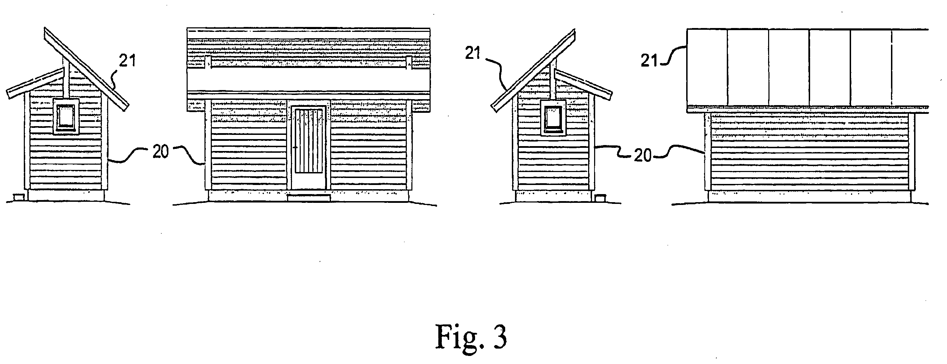

Figure 3 illustrates one example of a housing according to one aspect of the invention. The technical elements may be arranged inside a pre-fabricated shed 20. The shed may be transported to the building plot during an early stage of the construction process. The shed may be used as a storage space and it provides an interface to the power grid electric power and/or water supply. The shed may comprise an interface for the building, where all or a portion of the technical features related to power management or water management may be in the shed. The technical elements may be pre-installed on the factory site. The shed 20 comprises a photovoltaic system and solar panels 21 arranged on the roof. In this example, one side of the roof is covered with solar panels 21. The shed 20 comprises structures that are configured strengthen the shed 20 during the transport. With the structures the shed 20 may be lifted or moved.

The controller 5 may comprise a processor and a memory storing instructions that, when executed, control the operation of the controller 5. Embodiments of the controller 5 may be implemented in software, hardware, application logic or a combination of software, hardware and application logic. In an example embodiment, the application logic, software or instruction set is maintained on any one of various conventional computer-readable media. In the context of this document, a "computer-readable medium" may be any media or means that can contain, store, communicate, propagate or transport the instructions for use by or in connection with an instruction execution system, apparatus, or device, such as a computer. A computer-readable medium may comprise a computer-readable storage medium that may be any media or means that can contain or store the instructions for use by or in connection with an instruction execution system, apparatus, or device, such as a computer. The exemplary embodiments can store information relating to various processes described herein. This information can be stored in one or more memories, such as a hard disk, optical disk, magnetooptical disk, RAM, and the like. One or more databases can store the information used to implement the exemplary embodiments of the present inventions. The databases can be organized using data structures (e.g., records, tables, arrays, fields, graphs, trees, lists, and the like) included in one or more memories or storage devices listed herein. The processes described with respect to the exemplary embodiments can include appropriate data structures for storing data collected and/or generated by the processes of the devices and subsystems of the exemplary embodiments in one or more databases.

All or a portion of the exemplary embodiments can be conveniently implemented using one or more general purpose processors, microprocessors, digital signal processors, micro-controllers, and the like, programmed according to the teachings of the exemplary embodiments of the present inventions, as will be appreciated by those skilled in the computer and/or software art(s). Appropriate software can be readily prepared by programmers of ordinary skill based on the teachings of the exemplary embodiments, as will be appreciated by those skilled in the software art. In addition, the exemplary embodiments can be implemented by the preparation of application-specific integrated circuits or by interconnecting an appropriate network of conventional component circuits, as will be appreciated by those skilled in the electrical art(s). Thus, the exemplary embodiments are not limited to any specific combination of hardware and/or software.

It is obvious to a person skilled in the art that with the advancement of technology, the basic idea of the invention may be implemented in various ways. The invention and its embodiments are thus not limited to the examples described above; instead they may vary within the scope of the claims.

## Claims

1. A method for controlling a heating system comprising a first hot water boiler (6), a ground source heat pump (2) configured to heat the water of the first hot water boiler (6), a controller (5) connected to the ground source heat pump (2) and to the first hot water boiler (6), the method comprising the steps of: the first temperature
the controller (5) receiving first temperature data from a first layer of the first hot water boiler (6), and
**characterized by** the controller (5) modifying the first temperature data to a lower modified temperature data and sending the modified temperature data to the ground source heat pump (2), causing the ground source heat pump (2) to heat the water for the first hot water boiler (6).

2. The method according to claim 1, **characterized by** the heating system comprising at least two power sources comprising a photovoltaic system (1) connected to a power inverter (3) and a connection to a power-distribution network (4), wherein the power sources are connected to the controller (5), to the ground source heat pump (2) and to the first hot water boiler (6),
said method comprising the steps of:
the controller (5) receiving information of the power provided by the photovoltaic system (1);
selecting the power source according to the power received from the photovoltaic system (1),
if the power provided by the photovoltaic system (1) is greater than a first power limit, the photovoltaic system (1) provides power to the ground source heat pump (2).

3. The method according to claim 1 or 2, **characterized in that** if the power provided by the photovoltaic system (1) is less than the first power limit, the power-distribution network (4) provides power to the ground source heat pump (2).

4. The method according to any of the claims 1 to 3, **characterized in that** if the power provided by the photovoltaic system (1) is less than the first power limit, the direct current provided by the photovoltaic system (1) is directed to the boiler for heating the water.

5. The method according to any of the claims 1 to 4, **characterized by** the controller receiving second temperature data from a second layer of the first hot water boiler (6), wherein the second layer is below the first layer and the second temperature data is lower than the first temperature data, the controller (5) modifying the first temperature data to correspond to the second temperature data.

6. The method according to any of the claims 1 to 5, **characterized by** the controller modifying the first temperature data as a response to an outside temperature being below a predetermined value.

7. The method according to any of the claims 1 to 6, **characterized by** the heating system comprising a second hot water boiler and the controller (5) receiving the first temperature data and the second temperature data from the first hot water boiler (6) and from the second hot water boiler and receiving the power data from the photovoltaic system (1), wherein, if the second temperature data from the first hot water boiler (6) is over a predefined temperature limit, the photovoltaic system (1) provides power to the ground source heat pump (2) and the hot water is directed to the second hot water boiler. 8. A controller (5) for controlling a heating

8. A controller (5) for controlling a heating system comprising a first hot water boiler (6) a ground source heat pump (2) configured to heat the water of the first hot water boiler (6), the controller (5) being connected to the ground source heat pump (2) and to the first hot water boiler (6),
the controller (5) comprising means for receiving first temperature data from a first layer of the first hot water boiler (6) and
**characterized by**: the controller (5) comprising means for codifying the first temperature data to a lower modified temperature data and means for sending the modified temperature data to the ground sources heat pump (2) causing the ground source heat pump (2) to heat the water for the first hot water boiler (6).

9. The controller according to claim 8, **characterized by** the heating system comprising at least two power sources comprising a photovoltaic system (1) connected to a power inverter (3) and a connection to a power-distribution network (4), wherein the power sources are connected to the controller (5) to the ground source heat pump (2) and to the first hot water boiler (6), wherein the controller (5) comprises:
means for receiving information of the power provided by the photovoltaic system (1);
means for selecting the power source according to the power received from the photovoltaic system (1), and
means for directing power from the photovoltaic system (1) to the ground source heat pump (2) if the power provided by the photovoltaic system (1) is greater than a first power limit.

10. The controller according to claim 8 or 9, **characterized by** comprising means for directing power from the power-distribution network (4) to the ground source heat pump (2) if the power provided by the ground source heat pump (2) if the power provided by the photovoltaic system (1) is less than the first power limit.

11. The controller according to any of the claims 8 to 10, **characterized by** comprising means for directing the direct current provided by the photovoltaic system (1) to the boiler for heating the water if the power provided by the photovoltaic system (1) is less than the first power limit.

12. The controller according to any of the claims 8 to 11, **characterized by** comprising means for receiving second temperature data from a second layer of the first hot water boiler (6), wherein the second layer is below the first layer and the second temperature data is lower than the first temperature data, and the controller (5) comprising means for modifying the first temperature data to correspond to the second temperature data.

13. The controller according to any of the claims 8 to 12, **characterized by** comprising means for modifying the first temperature data as a response to an outside temperature being below a predetermined value.

14. The controller according to any of the claims 8 to 13, **characterized by** the heating system comprising a second hot water boiler and the controller (5) comprising means for receiving the first temperature data and the second temperature data from the first hot water boiler (6) and from the second hot water boiler and means for receiving the power data from the photovoltaic system (1), wherein, if the seconde temperature data from the first hot water boiler (6) is over a predefined temperature limit, the controller (5) comprises means for directing the power provided by the photovoltaic system (1) to the ground source heat pump (2) and means for directing the hot water to the second hot water boiler.

15. A system, **characterized by** comprising the heating system and the controller (5) according to any of the claims 8 to 14; and
a pre-fabricated housing (20) comprising:
connecting and receiving means to the power-distribution network (4) and to a water supply;
means for providing hot and cold water to a building; and
means for providing electric power to the building.

## Patentansprüche

1. Verfahren zum Steuern eines Heizungssystems umfassend einen ersten Warmwasserkessel (6), eine zum Erwärmen des Wassers des ersten Warmwasserkessels (6) ausgebildete Erdwärmepumpe (2), eine mit der Erdwärmepumpe (2) und dem ersten Warmwasserkessel (6) verbundene Steuerung (5), wobei das Verfahren die Schritte umfasst zum:
Empfangen von ersten Temperaturdaten durch die Steuerung (5) von einer ersten Schicht des ersten Warmwasserkessels (6), und
**dadurch gekennzeichnet, dass** die Steuerung (5) die ersten Temperaturdaten auf niedrigere modifizierte Temperaturdaten modifiziert und die modifizierten Temperaturdaten an die Erdwärmepumpe (2) sendet, wodurch die Erdwärmepumpe (2) zum Erwärmen des Wassers für den ersten Warmwasserkessel (6) veranlasst wird.

2. Verfahren nach Anspruch 1, **dadurch gekennzeichnet, dass** das Heizungssystem wenigstens zwei Stromquellen, umfassend eine mit einem Wechselrichter (3) verbundene Fotovoltaikanlage (1) und eine Verbindung mit einem Stromnetz (4), umfasst, wobei die Stromquellen mit der Steuerung (5), der Erdwärmepumpe (2) und dem ersten Warmwasserkessel (6) verbunden sind,
wobei das Verfahren die Schritte umfasst zum:
Empfangen von Informationen über den von der Fotovoltaikanlage (1) gelieferten Strom durch die Steuerung (5),
Wählen der Stromquelle entsprechend dem von der Fotovoltaikanlage (1) gelieferten Strom,
wenn der von der Fotovoltaikanlage (1) gelieferte Strom größer ist als eine erste Stromgrenze, die Fotovoltaikanlage (1) Strom für die Erdwärmepumpe (2) liefert.

3. Verfahren nach Anspruch 1 oder 2, **dadurch gekennzeichnet, dass**, wenn der von der Fotovoltaikanlage (1) gelieferte Strom kleiner ist als die erste Stromgrenze, das Stromnetz (4) Strom für die Erdwärmepumpe (2) liefert.

4. Verfahren nach einem der Ansprüche 1 bis 3, **dadurch gekennzeichnet, dass**, wenn der von der Fotovoltaikanlage (1) gelieferte Strom kleiner ist als die erste Stromgrenze, der von der Fotovoltaikanlage (1) gelieferte Gleichstrom zum Kessel zum Erwärmen des Wassers geleitet wird.

5. Verfahren nach einem der Ansprüche 1 bis 4, **dadurch gekennzeichnet, dass** die Steuerung zweite Temperaturdaten von einer zweiten Schicht des ersten Warmwasserkessels (6) empfängt, wobei die zweite Schicht unterhalb der ersten Schicht liegt und die zweiten Temperaturdaten niedriger sind als die ersten Temperaturdaten, wobei die Steuerung (5) die ersten Temperaturdaten so modifiziert, dass sie den zweiten Temperaturdaten entsprechen.

6. Verfahren nach einem der Ansprüche 1 bis 5, **dadurch gekennzeichnet, dass** die Steuerung die ersten Temperaturdaten als eine Reaktion auf eine Außentemperatur unter einem vorgegebenen Wert modifiziert.

7. Verfahren nach einem der Ansprüche 1 bis 6, **dadurch gekennzeichnet, dass** das Heizungssystem einen zweiten Warmwasserkessel umfasst und die Steuerung (5) die ersten Temperaturdaten und die zweiten Temperaturdaten vom ersten Warmwasserkessel (6) und vom zweiten Warmwasserkessel empfängt und die Stromdaten von der Fotovoltaikanlage (1) empfängt, wobei, wenn die zweiten Temperaturdaten vom ersten Warmwasserkessel (6) über einer vorgegebenen Temperaturgrenze liegen, die Fotovoltaikanlage (1) Strom für die Erdwärmepumpe (2) liefert und das Warmwasser zum zweiten Warmwasserkessel geleitet wird.

8. Steuerung (5) zum Steuern eines Heizungssystems, umfassend einen ersten Warmwasserkessel (6) und eine zum Erwärmen des Wassers des ersten Warmwasserkessels (6) ausgebildete Erdwärmepumpe (2), wobei die Steuerung (5) mit der Erdwärmepumpe (2) und dem ersten Warmwasserkessel (6) verbunden ist,
wobei die Steuerung (5) ein Mittel zum Empfangen von ersten Temperaturdaten von einer ersten Schicht des ersten Warmwasserkessels (6) umfasst, und
**dadurch gekennzeichnet, dass** die Steuerung (5) ein Mittel zum Modifizieren der ersten Temperaturdaten auf niedrigere modifizierte Temperaturdaten und ein Mittel zum Senden der modifizierten Temperaturdaten an die Erdwärmepumpe (2) umfasst, wodurch die Erdwärmepumpe (2) zum Erwärmen des Wassers für den ersten Warmwasserkessel (6) veranlasst wird.

9. Steuerung nach Anspruch 8, **dadurch gekennzeichnet, dass** das Heizungssystem wenigstens zwei Stromquellen, umfassend eine mit einem Wechselrichter (3) verbundene Fotovoltaikanlage (1) und eine Verbindung mit einem Stromnetz (4), umfasst, wobei die Stromquellen mit der Steuerung (5), der Erdwärmepumpe (2) und dem ersten Warmwasserkessel (6) verbunden sind, wobei die Steuerung (5) umfasst:
ein Mittel zum Empfangen von Informationen über den von der Fotovoltaikanlage (1) gelieferten Strom,
ein Mittel zum Wählen der Stromquelle entsprechend dem von der Fotovoltaikanlage (1) gelieferten Strom, und
ein Mittel zum Leiten von Strom von der Fotovoltaikanlage (1) zur Erdwärmepumpe (2), wenn der von der Fotovoltaikanlage (1) gelieferte Strom größer ist als eine erste Stromgrenze.

10. Steuerung nach Anspruch 8 oder 9, **dadurch gekennzeichnet, dass** sie ein Mittel zum Leiten von Strom vom Stromnetz (4) zur Erdwärmepumpe (2), wenn der von der Fotovoltaikanlage (1) gelieferte Strom kleiner ist als die erste Stromgrenze, umfasst.

11. Steuerung nach Anspruch 8 bis 10, **dadurch gekennzeichnet, dass** sie ein Mittel zum Leiten des von der Fotovoltaikanlage (1) gelieferten Stroms zum Kessel zum Erwärmen des Wassers, wenn der von der Fotovoltaikanlage (1) gelieferte Strom kleiner ist als die erste Stromgrenze, umfasst.

12. Steuerung nach einem der Ansprüche 8 bis 11, **dadurch gekennzeichnet, dass** sie ein Mittel zum Empfangen von zweiten Temperaturdaten von einer zweiten Schicht des ersten Warmwasserkessels (6) umfasst, wobei die zweite Schicht unterhalb der ersten Schicht liegt und die zweiten Temperaturdaten niedriger sind als die ersten Temperaturdaten, und die Steuerung (5) ein Mittel zum Modifizieren der ersten Temperaturdaten, so dass diese den zweiten Temperaturdaten entsprechen, umfasst.

13. Steuerung nach einem der Ansprüche 8 bis 12, **dadurch gekennzeichnet, dass** sie ein Mittel zum Modifizieren der ersten Temperaturdaten als eine Reaktion auf eine Außentemperatur unter einem vorgegebenen Wert umfasst.

14. Steuerung nach einem der Ansprüche 8 bis 13, **dadurch gekennzeichnet, dass** das Heizungssystem einen zweiten Warmwasserkessel umfasst und die Steuerung (5) ein Mittel zum Empfangen der ersten Temperaturdaten und der zweiten Temperaturdaten vom ersten Warmwasserkessel (6) und vom zweiten Warmwasserkessel und ein Mittel zum Empfangen der Stromdaten von der Fotovoltaikanlage (1) umfasst, wobei, wenn die zweiten Temperaturdaten vom ersten Warmwasserkessel (6) über einer vorgegebenen Temperaturgrenze liegen, die Steuerung (5) ein Mittel zum Leiten des von der Fotovoltaikanlage (1) gelieferten Stroms an die Erdwärmepumpe (2) und ein Mittel zum Leiten des Warmwassers an den zweiten Warmwasserkessel umfasst.

15. System, **dadurch gekennzeichnet, dass** es das Heizungssystem und die Steuerung (5) nach einem der Ansprüche 8 bis 14 umfasst; und
ein vorgefertigtes Gehäuse (20), umfassend:
ein Verbindungs- und Empfangsmittel zum Stromnetz (4) und zu einer Wasserversorgung;
ein Mittel zum Liefern von Warm- und Kaltwasser für ein Gebäude; und
ein Mittel zum Liefern von Strom für das Gebäude.

## Revendications

1. Procédé pour commander un système de chauffage comprenant une première chaudière à eau chaude (6), une pompe à chaleur géothermique (2) configurée pour chauffer l'eau de la première chaudière à eau chaude (6), un dispositif de commande (5) raccordé à la pompe à chaleur géothermique (2) et à la première chaudière à eau chaude (6), le procédé comprenant les étapes suivantes :
le dispositif de commande (5) reçoit des premières données de température en provenance d'une première couche de la première chaudière à eau chaude (6) et
**caractérisé par** le dispositif de commande (5) qui modifie les premières données de température en données de température modifiées inférieures et envoie les données de température modifiées à la pompe à chaleur géothermique (2), ce qui contraint la pompe à chaleur géothermique (2) à chauffer l'eau pour la première chaudière à eau chaude (6).

2. Procédé selon la revendication 1, **caractérisé par** le système de chauffage qui comprend au moins deux sources d'énergie comprenant un système photovoltaïque (1) raccordé à un convertisseur continu-alternatif (3) et une connexion à un réseau de distribution d'énergie (4), dans lequel les sources d'énergie sont raccordées au dispositif de commande (5), à la pompe à chaleur géothermique (2) et à la première chaudière à eau chaude (6),
ledit procédé comprenant les étapes suivantes :
le dispositif de commande (5) reçoit des informations de l'énergie fournie par le système photovoltaïque (1) ;
la sélection de la source d'énergie en fonction de l'énergie reçue du système photovoltaïque (1),
si l'énergie fournie par le système photovoltaïque (1) est supérieure à une première limite d'énergie, le système photovoltaïque (1) fournit de l'énergie à la pompe à chaleur géothermique (2).

3. Procédé selon la revendication 1 ou 2, **caractérisé en ce que**, si l'énergie fournie par le système photovoltaïque (1) est inférieure à la première limite d'énergie, le réseau de distribution d'énergie (4) fournit de l'énergie à la pompe à chaleur géothermique (2) .

4. Procédé selon l'une quelconque des revendications 1 à 3, **caractérisé en ce que**, si l'énergie fournie par le système photovoltaïque (1) est inférieure à la première limite d'énergie, le courant continu fourni par le système photovoltaïque (1) est dirigé vers la chaudière pour chauffer l'eau.

5. Procédé selon l'une quelconque des revendications 1 à 4, **caractérisé par** le dispositif de commande qui reçoit des secondes données de température en provenance d'une seconde couche de la première chaudière à eau chaude (6), dans lequel la seconde couche se trouve en dessous de la première couche et les secondes données de température sont inférieures aux premières données de température, le dispositif de commande (5) modifiant les premières données de température de sorte à correspondre aux secondes données de température.

6. Procédé selon l'une quelconque des revendications 1 à 5, **caractérisé par** le dispositif de commande qui modifie les premières données de température en réponse à une température extérieure qui est inférieure à une valeur prédéterminée.

7. Procédé selon l'une quelconque des revendications 1 à 6, **caractérisé par** le système de chauffage qui comprend une seconde chaudière à eau chaude et le dispositif de commande (5) qui reçoit les premières données de température et les secondes données de température en provenance de la première chaudière à eau chaude (6) et de la seconde chaudière à eau chaude et qui reçoit les données d'énergie en provenance du système photovoltaïque (1), dans lequel, si les secondes données de température provenant de la première chaudière à eau chaude (6) sont supérieures à une limite de température prédéfinie, le système photovoltaïque (1) fournit de l'énergie à la pompe à chaleur géothermique (2) et l'eau chaude est dirigée vers la seconde chaudière à eau chaude.

8. Dispositif de commande (5) pour commander un système de chauffage comprenant une première chaudière à eau chaude (6), une pompe à chaleur géothermique (2) configurée pour chauffer l'eau de la première chaudière à eau chaude (6), le dispositif de commande (5) étant raccordé à la pompe à chaleur géothermique (2) et à la première chaudière à eau chaude (6),
le dispositif de commande (5) comprenant un moyen pour recevoir des premières données de température en provenance d'une première couche de la première chaudière à eau chaude (6) et
**caractérisé par** le dispositif de commande (5) comprenant un moyen pour modifier les premières données de température en données de température modifiées inférieures et un moyen pour envoyer les données de température modifiées à la pompe à chaleur géothermique (2), ce qui contraint la pompe à chaleur géothermique (2) à chauffer l'eau pour la première chaudière à eau chaude (6) .

9. Dispositif de commande selon la revendication 8, **caractérisé par** le système de chauffage qui comprend au moins deux sources d'énergie comprenant un système photovoltaïque (1) raccordé à un convertisseur continu-alternatif (3) et une connexion à un réseau de distribution d'énergie (4), dans lequel les sources d'énergie sont raccordées au dispositif de commande (5), à la pompe à chaleur géothermique (2) et à la première chaudière à eau chaude (6), dans lequel le dispositif de commande (5) comprend :
un moyen pour recevoir des informations de l'énergie fournie par le système photovoltaïque (1) ;
un moyen pour sélectionner la source d'énergie en fonction de l'énergie reçue du système photovoltaïque (1) , et
un moyen pour diriger de l'énergie provenant du système photovoltaïque (1) vers la pompe à chaleur géothermique (2) si l'énergie fournie par le système photovoltaïque (1) est supérieure à une première limite d'énergie.

10. Dispositif de commande selon la revendication 8 ou 9, **caractérisé en ce qu'**il comprend un moyen pour diriger de l'énergie provenant du réseau de distribution d'énergie (4) vers la pompe à chaleur géothermique (2) si l'énergie fournie par le système photovoltaïque (1) est inférieure à la première limite d'énergie.

11. Dispositif de commande selon l'une quelconque des revendications 8 à 10, **caractérisé en ce qu'**il comprend un moyen pour diriger le courant continu fourni par le système photovoltaïque (1) vers la chaudière pour chauffer l'eau si l'énergie fournie par le système photovoltaïque (1) est inférieure à la première limite d'énergie.

12. Dispositif de commande selon l'une quelconque des revendications 8 à 11, **caractérisé en ce qu'**il comprend un moyen pour recevoir des secondes données de température en provenance d'une seconde couche de la première chaudière à eau chaude (6), dans lequel la seconde couche se trouve en dessous de la première couche et les secondes données de température sont inférieures aux premières données de température et le dispositif de commande (5) comprenant un moyen pour modifier les premières données de température de sorte à correspondre aux secondes données de température.

13. Dispositif de commande selon l'une quelconque des revendications 8 à 12, **caractérisé en ce qu'**il comprend un moyen pour modifier les premières données de température en réponse à une température extérieure qui est inférieure à une valeur prédéterminée.

14. Dispositif de commande selon l'une quelconque des revendications 8 à 13, **caractérisé par** le système de chauffage qui comprend une seconde chaudière à eau chaude et le dispositif de commande (5) comprenant un moyen pour recevoir les premières données de température et les secondes données de température en provenance de la première chaudière à eau chaude (6) et de la seconde chaudière à eau chaude et un moyen pour recevoir les données d'énergie en provenance du système photovoltaïque (1), dans lequel, si les secondes données de température provenant de la première chaudière à eau chaude (6) sont supérieures à une limite de température prédéfinie, le dispositif de commande (5) comprend un moyen pour diriger l'énergie fournie par le système photovoltaïque (1) vers la pompe à chaleur géothermique (2) et un moyen pour diriger l'eau chaude vers la seconde chaudière à eau chaude.

15. Système, **caractérisé en ce qu'**il comprend le système de chauffage et le dispositif de commande (5) selon l'une quelconque des revendications 8 à 14 ; et
un boîtier préfabriqué (20) comprenant :
un moyen de réception et de connexion au réseau de distribution d'énergie (4) et à une alimentation en eau ;
un moyen pour fournir de l'eau chaude et de l'eau froide à un bâtiment ; et
un moyen pour fournir de l'énergie électrique au bâtiment.
